# EUROPÄISCHE PATENTSCHRIFT

(11) **EP 3 888 230 B1**
(45) Veröffentlichungstag und Bekanntmachung des Hinweises auf die Patenterteilung: **16.04.2025**
(21) Anmeldenummer: 19789664.0
(22) Anmeldetag: 15.10.2019
(51) Int. Cl.: H02K 1/278, H02K 9/04, H02K 1/32, H02K 9/08

(54) **ROTOR EINER ELEKTRISCHEN MASCHINE**
ROTOR OF AN ELECTRIC MACHINE
ROTOR D'UNE MACHINE ÉLECTRIQUE

(30) Priorität: 28.11.2018 DE 102018220407
(43) Veröffentlichungstag der Anmeldung: 06.10.2021
(73) Patentinhaber: Robert Bosch GmbH, 70442 Stuttgart (DE)
(72) Erfinder: KNAPPENBERGER, Uwe, 75417 Muehlacker (DE); KUEHBACHER, Daniel, 70569 Stuttgart (DE); BENSING, Felix, 70437 Stuttgart (DE); STAMMLER, Jannik, 70197 Stuttgart (DE); PETER, Ralph, 74348 Lauffen (DE)
(86) Internationale Anmeldenummer: PCT/EP2019/077973
(87) Internationale Veröffentlichungsnummer: WO 2020/108842

(56) Entgegenhaltungen:
- WO-A1-2018/061768
- JP-A- 2005 312 097
- JP-A- 2011 166 908
- JP-A- H02 219 447

## Beschreibung

### Stand der Technik

Die Erfindung geht aus von einem Rotor einer elektrischen Maschine nach der Gattung des unabhängigen Hauptanspruchs 1.

Es ist schon ein Rotor einer elektrischen Maschine aus der US 5,889,342 B bekannt, mit einem um eine Rotorachse drehbaren Rotorkörper, der aus zumindest einem als Rotorblechpaket ausgebildeten Rotorteilkörper besteht, und der jeweils mehrere Kühlkanäle aufweist, die an ihren Enden jeweils eine Kühlkanalöffnung haben, wobei die eine Kühlkanalöffnung eines der Kühlkanäle radial weiter außerhalb angeordnet ist als die andere Kühlkanalöffnung desselben Kühlkanals, derart, dass sich eine Strömung, insbesondere eine Luftströmung, in dem Kühlkanal bei Rotation des Rotors aufgrund der Fliehkräfte einstellt. An zumindest einer der beiden Stirnseiten des Rotorkörpers ist ein Abdeckelement vorgesehen, das einen radial innersten Teilquerschnitt eines der Kühlkanalöffnungen eines der Kühlkanäle abdeckt. Die treibende Kraft zur Erzeugung der Luftströmung wird durch einen radialen Versatz zwischen einem Kanal einer Hohlwelle des Rotors und einer der Kühlkanalöffnungen des Rotors erzeugt.

JPH02219447 A ist als nächstliegender Stand der Technik angesehen und offenbart die Merkmale der Präambel des unabhängigen Hauptanspruchs 1.

Die Aufgabe der Erfindung ist einen Rotor einer elektrischen Maschine bereit zu stellen, bei dessen Rotation durch verbesserte Luftströmungen im Rotorkörper eine effizientere Kühlung des Rotors ermöglicht wird.

Die erfindungsgemäße Aufgabe wird durch einen Rotor einer elektrischen Maschine gemäß den Merkmalen des unabhängigen Hauptanspruchs 1 gelöst.

### Vorteile der Erfindung

Der erfindungsgemäße Rotor der elektrischen Maschine mit den kennzeichnenden Merkmalen des unabhängigen Hauptanspruchs 1 hat demgegenüber den Vorteil, dass zur Erzeugung der Luftströmung im Rotor keine Hohlwelle benötigt wird. Die treibende Kraft zur Erzeugung der Luftströmung wird allein in dem jeweiligen, im wesentlichen in axialer Richtung verlaufenden Kühlkanal des zumindest einen Rotorteilkörpers des Rotors erzeugt. Dies wird erfindungsgemäß erreicht, indem das erste Abdeckelement den radial innersten Teilquerschnitt der jeweiligen Kühlkanalöffnung mit einem bezüglich der Rotorachse radial äußeren Randabschnitt abdeckt und jeweils einen radial äußersten Teilquerschnitt derselben Kühlkanalöffnung als Kühlkanalausgang unbedeckt lässt. Weiterhin ist erfindungsgemäß die andere Kühlkanalöffnung desselben Kühlkanals jeweils ein Kühlkanaleingang, wobei stromauf der Kühlkanaleingänge jeweils eine bezüglich der Rotorachse axiale Zuströmung vorgesehen ist. Außerdem ist der geometrische Schwerpunkt des Kühlkanalausgangs eines der Kühlkanäle erfindungsgemäß jeweils gegenüber dem geometrischen Schwerpunkt des Kühlkanaleingangs desselben Kühlkanals in radialer Richtung bezüglich der Rotorachse versetzt.

Durch die in den Unteransprüchen aufgeführten Maßnahmen sind vorteilhafte Weiterbildungen und Verbesserungen des im unabhängigen Hauptanspruch 1 angegebenen Rotors werden in den abhängigen Ansprüchen beschrieben.

Erfindungsgemäß ist an der anderen Stirnseite des Rotorkörpers ein zweites Abdeckelement angeordnet und ist einer der Kühlkanaleingänge jeweils durch eines der beiden Abdeckelemente an einem radial äußersten Teilquerschnitt und der zugeordnete Kühlkanalausgang desselben Kühlkanals jeweils durch das andere Abdeckelement an einem radial innersten Teilquerschnitt derart abgedeckt, dass jeweils ein radialer Versatz zwischen den unbedeckten bzw. offenen Querschnitten der beiden Kühlkanalöffnungen eines der Kühlkanäle erzeugt ist. Auf diese Weise wird bei Rotation des Rotors eine Luftströmung im Rotorkörper erzeugt.

Sehr vorteilhaft ist es, wenn der radiale Versatz der beiden Kühlkanalöffnungen eines der Kühlkanäle ausschließlich durch die beiden Abdeckelemente erzeugt ist. Auf diese Weise bleibt die Ausbildung des Rotorkörpers unverändert, beispielsweise hinsichtlich der axialen Baulänge, und die Luftströmung wird durch die Geometrie bzw. das Design der Abdeckelemente eingestellt.

Auch vorteilhaft ist, wenn der Kühlkanaleingang und der Kühlkanalausgang jedes Kühlkanals einer ersten Gruppe von Kühlkanälen jeweils gegenüber dem jeweiligen Kühlkanaleingang und Kühlkanalausgang einer zweiten Gruppe von Kühlkanälen derart stirnseitenvertauscht ist, dass die Kühlkanäle der ersten Gruppe und die Kühlkanäle der zweiten Gruppe bei Rotation des Rotors in entgegengesetzter Richtung durchströmt sind. Mit anderen Worten ausgedrückt liegt also der Kühlkanaleingang der ersten Gruppe von Kühlkanälen auf der einen Stirnseite des Rotors und der Kühlkanaleingang der zweiten Gruppe von Kühlkanälen auf der anderen Stirnseite des Rotors. Dasselbe gilt jeweils für die Kühlkanalausgänge der ersten und zweiten Gruppe von Kühlkanälen. Auf diese Weise erzeugen die Luftströmungen durch den Rotorkörper keinen Druckunterschied zwischen den stirnseitig an den Rotor angrenzenden Hohlräumen.

Nach vorteilhaften Ausführungen können eine oder mehrere Abfolgen von zumindest einem Kühlkanal der ersten Gruppe von Kühlkanälen und von zumindest einem Kühlkanal der zweiten Gruppe von Kühlkanälen entlang des Umfangs des Rotors vorgesehen sein.

Darüber hinaus vorteilhaft ist, wenn die auf einer der beiden Stirnseiten des Rotors angeordneten Kühlkanalöffnungen jeweils, insbesondere in Umfangsrichtung abwechselnd, entweder am radial äußersten oder am radial innersten Teilquerschnitt abgedeckt sind, und dass die beiden Abdeckelemente in Umfangsrichtung zueinander versetzt sind, insbesondere um einen Winkel, der einem Winkelabstand zwischen zwei benachbarten Kühlkanälen entspricht. Auf diese Weise werden im Rotor zwei Gruppen von Kühlkanälen gebildet, die bei Rotation des Rotors in entgegengesetzter Richtung durchströmt sind.

Nach einem vorteilhaften Ausführungsbeispiel weisen die beiden Abdeckelemente jeweils Bereiche mit unterschiedlicher radialer Erstreckung auf. Die ersten Bereiche der beiden Abdeckelemente decken jeweils die radial innersten Teilquerschnitte der Kühlkanalausgänge ab. Die zweiten Bereiche der beiden Abdeckelemente decken dagegen jeweils die radial äußersten Teilquerschnitte der Kühlkanaleingänge ab und haben radial innerhalb der abgedeckten äußersten Teilquerschnitte in den jeweiligen Kühlkanal mündende Durchgangsöffnungen. Weiterhin haben die ersten Bereiche der beiden Abdeckelemente jeweils eine kleinere radiale Erstreckung als die zweiten Bereiche. Beispielsweise bildet der erste Bereich 15 jeweils eine Einbuchtung und der zweite Bereich 16 jeweils eine Ausbuchtung.

Außerdem vorteilhaft ist, wenn das Abdeckelement eine Scheibe, insbesondere eine Wuchtscheibe oder eine Blechlamelle des zumindest einen Rotorteilkörpers, ist. Auf diese Weise ist die Funktion der Luftströmungserzeugung in ein bereits bestehendes Element des Rotors integriert, so dass die axiale Baulänge des Rotors verkleinert werden kann.

### Zeichnung

Ein Ausführungsbeispiel der Erfindung ist in der Zeichnung vereinfacht dargestellt und in der nachfolgenden Beschreibung näher erläutert.
- Fig.1: zeigt eine Schnittansicht eines erfindungsgemäßen Rotors einer elektrischen Maschine entlang einer Linie I-I in Fig.2,
- Fig.2: eine Seitenansicht des erfindungsgemäßen Rotors nach Fig.1,
- Fig.3: eine Seitenansicht des erfindungsgemäßen Rotors nach Fig.1 ohne ein erfindungsgemäßes Abdeckelement,
- Fig.4: eine dreidimensionale Ansicht des erfindungsgemäßen Rotors einer elektrischen Maschine und
- Fig.5: eine elektrische Maschine mit dem erfindungsgemäßen Rotor nach Fig.1 bis Fig.4.

### Beschreibung des Ausführungsbeispiels

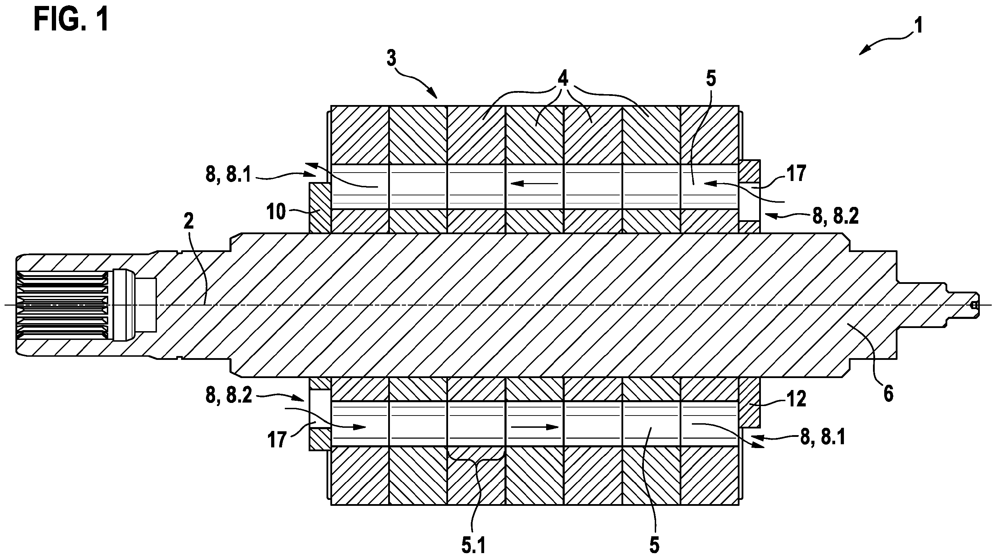

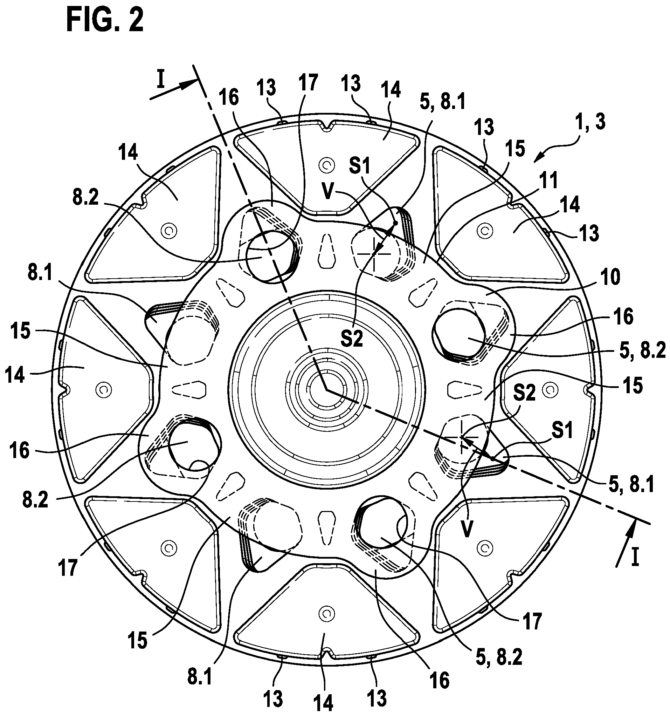

Fig.1 zeigt eine Schnittansicht eines erfindungsgemäßen Rotors einer elektrischen Maschine entlang einer Linie I-I in Fig.2.

Der Rotor 1 einer elektrischen Maschine weist einen um eine Rotorachse 2 drehbaren Rotorkörper 3 auf, der zumindest ein Rotorteilkörper 4, beispielsweise ein Rotorblechpaket 4, umfasst und jeweils mehrere, über den Umfang des Rotors 1 verteilte Kühlkanäle 5 aufweist. Unter einem Kühlkanal 5 ist dabei ein von Luft durchströmbarer Kanal des Rotorkörpers 3 zu verstehen. Die Kühlkanäle 5 verlaufen jeweils von einer Stirnseite des Rotors 1 mit im wesentlichen axialer Längserstreckung durchgehend bis zur anderen Stirnseite des Rotors 1. Nach dem Ausführungsbeispiel weist der Rotor 1 mehrere Rotorteilkörper 4 auf, die in bekannter Weise in Umfangsrichtung bezüglich der Rotorachse 2 zueinander verdreht sind und entsprechende Kühlkanalabschnitte 5.1 zur Bildung der Kühlkanäle 5 aufweisen. Die Kühlkanäle 5 haben an ihren Enden jeweils eine Kühlkanalöffnung 8, wobei die eine Kühlkanalöffnung 8.1 eines der Kühlkanäle 5 jeweils radial weiter außerhalb angeordnet ist als die andere Kühlkanalöffnung 8.2 desselben Kühlkanals 5, derart, dass sich eine Strömung, insbesondere eine Luftströmung, in dem Kühlkanal 5 bei Rotation des Rotors 1 aufgrund der Fliehkräfte einstellt. Der Rotor 1 weist neben dem Rotorkörper 3 eine drehbare Rotorwelle 6 auf, die drehfest mit dem Rotorkörper 3 verbunden ist.

An einer der beiden Stirnseiten des Rotorkörpers 3 ist ein erstes Abdeckelement 10 vorgesehen, das einen bezüglich der Rotorachse 2 radial innersten Teilquerschnitt zumindest eines der Kühlkanalöffnungen 8 zumindest eines der Kühlkanäle 5 abdeckt.

Erfindungsgemäß ist vorgesehen, dass das erste Abdeckelement 10 den radial innersten Teilquerschnitt der jeweiligen Kühlkanalöffnung 8 mit einem bezüglich der Rotorachse 2 radial äußeren Randabschnitt 11 abdeckt und einen radial äußersten Teilquerschnitt derselben Kühlkanalöffnung 8 als Kühlkanalausgang 8.1 unbedeckt lässt. Die andere Kühlkanalöffnung 8.2 desselben Kühlkanals 5 ist jeweils ein Kühlkanaleingang 8.2. Stromauf der Kühlkanaleingänge 8.2 ist jeweils eine bezüglich der Rotorachse 2 axiale Zuströmung vorgesehen. Erfindungsgemäß ist der geometrische Schwerpunkt S1 des Kühlkanalausgangs 8.1 jeweils gegenüber dem geometrischen Schwerpunkt S2 des Kühlkanaleingangs 8.2 desselben Kühlkanals 5 in radialer Richtung bezüglich der Rotorachse 2 versetzt. Dies kann beispielsweise für alle Kühlkanäle 5 des Rotors 1 gelten.

An der anderen Stirnseite des Rotorkörpers 3 ist ein zweites Abdeckelement 12 angeordnet, das beispielsweise identisch wie das erste Abdeckelement 10 ausgebildet ist. Die beiden Abdeckelemente 10, 12 liegen an einer der beiden Stirnseiten des Rotorkörpers 3 bündig an einem der axial äußeren Rotorteilkörper 4 an und können aus Metall oder Kunststoff hergestellt sein. Die beiden Abdeckelemente 10,12 können als eine Scheibe, beispielsweise als Wuchtscheibe oder als Blechlamelle eines der Rotorteilkörper 4 ausgeführt sein.

Der jeweilige Kühlkanaleingang 8.2, beispielsweise jeder Kühlkanaleingang 8.2 der Kühlkanäle 5 des Rotors 1, ist jeweils durch eines der beiden Abdeckelemente 10,12 an einem radial innersten Teilquerschnitt und der zugeordnete Kühlkanalausgang 8.1 desselben Kühlkanals 5 durch das jeweils andere Abdeckelement 10,12 an einem radial äußersten Teilquerschnitt derart abgedeckt, dass jeweils ein bezüglich der Rotorachse 2 radialer Versatz V zwischen den unbedeckten bzw. offenen Querschnitten der beiden Kühlkanalöffnungen 8.1,8.2 eines der Kühlkanäle 5 erzeugt ist. Der radiale Versatz V der beiden Kühlkanalöffnungen 8 eines der Kühlkanäle 5 ist dabei ausschließlich durch die beiden Abdeckelemente 10,12 erzeugt.

Der Kühlkanaleingang 8.2 und der Kühlkanalausgang 8.1 jedes Kühlkanals 5 einer ersten Gruppe von Kühlkanälen 5 ist jeweils gegenüber dem jeweiligen Kühlkanaleingang 8.2 und Kühlkanalausgang 8.1 einer zweiten Gruppe von Kühlkanälen 5 derart stirnseitenvertauscht, dass die Kühlkanäle 5 der ersten Gruppe und die Kühlkanäle 5 der zweiten Gruppe bei Rotation des Rotors 1 in entgegengesetzter Richtung durchströmt sind.

Die Kühlkanäle 5 der ersten Gruppe von Kühlkanälen 5 und die Kühlkanäle 5 der zweiten Gruppe von Kühlkanälen 5 können über den Umfang des Rotors 1 beliebig verteilt sein. Beispielsweise sind eine oder mehrere Abfolgen von zumindest einem Kühlkanal 5 der ersten Gruppe von Kühlkanälen 5 und von zumindest einem Kühlkanal 5 der zweiten Gruppe von Kühlkanälen 5 entlang des Umfangs des Rotors 1 vorgesehen. Nach dem Ausführungsbeispiel ist jeweils eine Abfolge von einem Kühlkanal 5 der ersten Gruppe und einem Kühlkanal 5 der zweiten Gruppe mehrfach in Umfangsrichtung hintereinander angeordnet. Alternativ können auch mehrere Kühlkanäle der ersten Gruppe oder auch mehrere Kühlkanäle der zweiten Gruppe zueinander benachbart angeordnet sein, so dass eine Abfolge von mehreren Kühlkanälen 5 der ersten Gruppe und mehreren Kühlkanälen 5 der zweiten Gruppe gebildet ist. Weiterhin kann über den Umfang des Rotors 1 gesehen nur eine Abfolge von Kühlkanälen 5 der ersten Gruppe und Kühlkanälen 5 der zweiten Gruppe vorgesehen sein.

Die beiden Abdeckelemente 10,12 sind in Umfangsrichtung zueinander versetzt, um jeweils den erfindungsgemäßen radialen Versatz der beiden Kühlkanalöffnungen 8 eines der Kühlkanäle 5 zu erreichen, beispielsweise um einen Winkel, der einem Winkelabstand zwischen zwei benachbarten Kühlkanälen 5 entspricht.

Fig.2 zeigt eine Seitenansicht des erfindungsgemäßen Rotors nach Fig.1.

In dem Rotorkörper 3 ist außerdem pro Rotorpol zumindest ein Permanentmagnet 13 angeordnet, dessen Aufnahme in dem Rotorkörper 3 stirnseitig beispielsweise von einer Abdeckung 14 überdeckt ist.

Die auf einer der beiden Stirnseiten des Rotors 1 angeordneten Kühlkanalöffnungen 8 sind jeweils, beispielsweise in Umfangsrichtung abwechselnd, entweder am radial äußersten oder am radial innersten Teilquerschnitt abgedeckt.

Die beiden Abdeckelemente 10,12 weisen jeweils Bereiche mit unterschiedlicher radialer Erstreckung auf. Erste Bereiche 15 der beiden Abdeckelemente 10,12 decken jeweils die radial innersten Teilquerschnitte der Kühlkanalausgänge 8.1 mit dem radial äußeren Randabschnitt 11 ab. Zweite Bereiche 16 der beiden Abdeckelemente 10,12 decken jeweils die radial äußersten Teilquerschnitte der Kühlkanaleingänge 8.2 mit dem radial äußeren Randabschnitt 11 ab und weisen radial innerhalb der abgedeckten äußersten Teilquerschnitte in den jeweiligen Kühlkanal 5 mündende Durchgangsöffnungen 17 auf. Weiterhin haben die ersten Bereiche 15 der beiden Abdeckelemente 10,12 jeweils eine kleinere radiale Erstreckung als die zweiten Bereiche 16. Nach dem Ausführungsbeispiel ist eine Abfolge von einem ersten Bereich 15 und einem zweiten Bereich 16 in Umfangsrichtung mehrfach hintereinander angeordnet. Damit ist zwischen zwei zweiten Bereichen 16 jeweils ein erster Bereich 15 angeordnet. Dabei bildet der erste Bereich 15 beispielsweise jeweils eine Einbuchtung und der zweite Bereich 16 beispielsweise jeweils eine Ausbuchtung.

Die Anzahl der Durchgangsöffnungen 17 in dem Abdeckelement 10,12 entspricht der Hälfte der Anzahl der Kühlkanalöffnungen 8 auf einer der beiden Stirnseiten des Rotorkörpers 3.

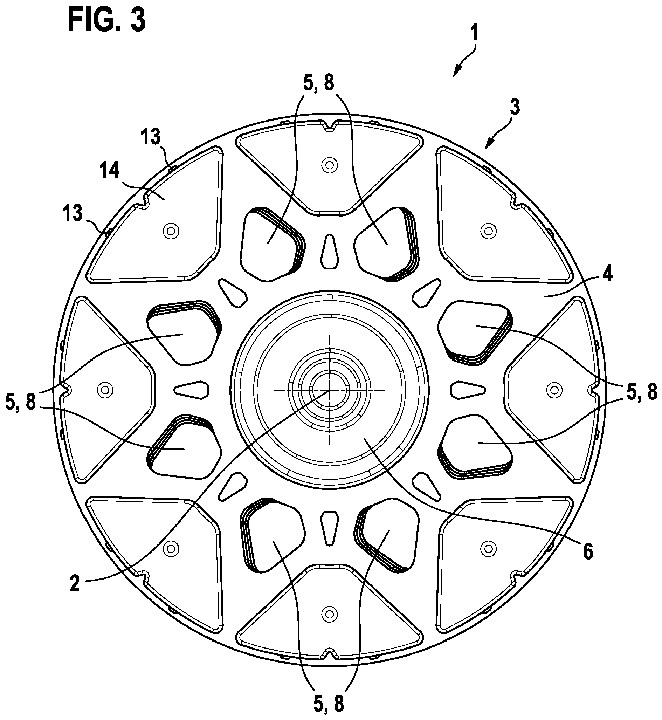

Fig.3 zeigt eine Seitenansicht des erfindungsgemäßen Rotors nach Fig.1 ohne das erfindungsgemäße Abdeckelement. Der Querschnitt der Kühlkanäle 5 ist beliebig und nach dem Ausführungsbeispiel rautenförmig ausgebildet.

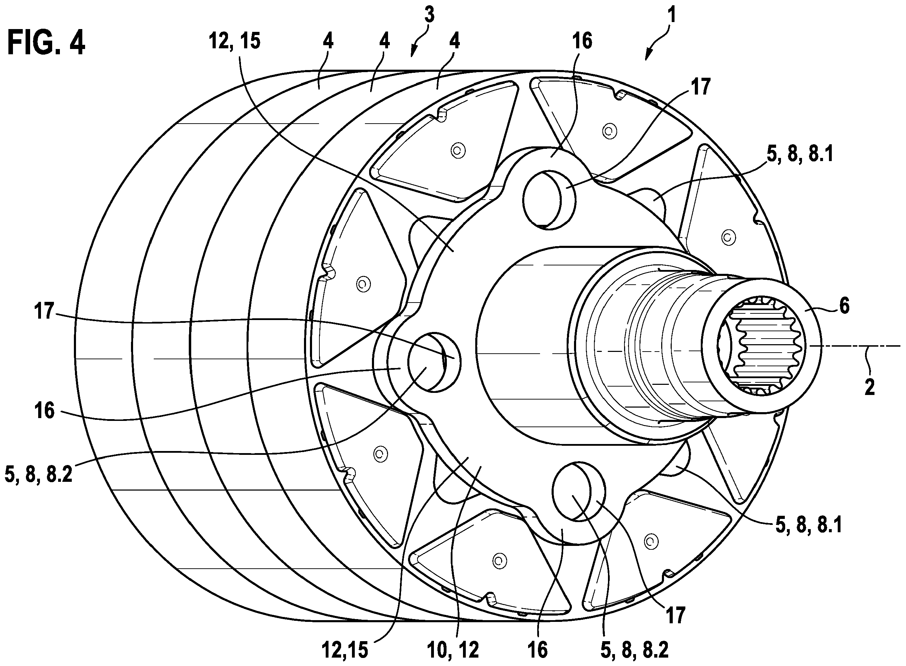

Fig.4 zeigt eine dreidimensionale Ansicht des erfindungsgemäßen Rotors einer elektrischen Maschine.

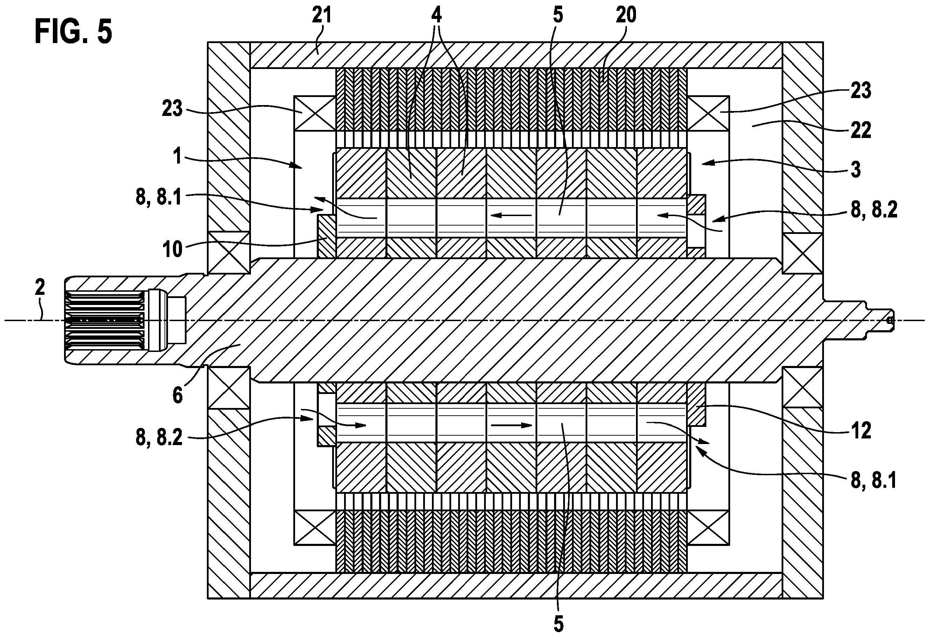

Fig.5 zeigt eine elektrische Maschine mit dem erfindungsgemäßen Rotor nach Fig.1 bis Fig.4. Der Rotor 1 ist von einem Stator 20 umgeben. Der Stator 20 ist in einem Maschinengehäuse 21 angeordnet.

Die beiden Kühlkanalöffnungen 8 der jeweiligen Kühlkanäle 5 des Rotors 1 führen in axialer Richtung bezüglich der Rotorachse 2 in einen stirnseitig an den Rotor 1 angrenzenden, beispielsweise luftgefüllten, Gehäuseinnenraum 22 der elektrischen Maschine. Der Gehäuseinnenraum 22 umfasst ein radial innerhalb eines Wickelkopfes 23 des Stators 20 gebildetes Volumen.

## Patentansprüche

1. Rotor einer elektrischen Maschine mit einem um eine Rotorachse (2) drehbaren Rotorkörper (3), der zumindest einen Rotorteilkörper (4), insbesondere ein Rotorblechpaket (4), umfasst und jeweils ein oder mehrere Kühlkanäle (5) aufweist, die an ihren Enden jeweils eine Kühlkanalöffnung (8.1,8.2) haben, wobei die eine Kühlkanalöffnung (8.1) eines der Kühlkanäle (5) jeweils radial weiter außerhalb angeordnet ist als die andere Kühlkanal-öffnung (8.2) desselben Kühlkanals (5), derart, dass sich eine Luftströmung, in dem Kühlkanal (5) bei Rotation des Rotors (1) aufgrund der Fliehkräfte einstellt, wobei an einer der beiden Stirn-seiten des Rotorkörpers (3) ein erstes Abdeckelement (10) vorgesehen ist, das einen radial innersten Teilquerschnitt zumindest eines der Kühlkanal-öffnungen (8.1) zumindest eines der Kühlkanäle (5) abdeckt,
**dadurch gekennzeichnet, dass**
- das erste Abdeckelement (10) den radial innersten Teilquerschnitt der jeweiligen Kühlkanalöffnung (8.1) mit einem bezüglich der Rotorachse (2) radial äußeren Randabschnitt (11) abdeckt und jeweils einen radial äußersten Teilquerschnitt derselben Kühlkanalöffnung (8.1) als Kühlkanalausgang (8.1) unbedeckt lässt, dass
- die andere Kühlkanalöffnung (8.2) desselben Kühlkanals (5) jeweils ein Kühlkanaleingang ist und dass stromauf der Kühlkanaleingänge (8.2) jeweils eine bezüglich der Rotorachse (2) axiale Zuströmung vorgesehen ist, dass
- der geometrische Schwerpunkt (S1) des Kühlkanalausgangs (8.1) jeweils gegenüber dem geometrischen Schwerpunkt (S2) des Kühlkanal-eingangs (8.2) desselben Kühlkanals (5) in radialer Richtung bezüglich der Rotorachse (2) versetzt ist, dass
- an der anderen Stirnseite des Rotorkörpers (3) ein zweites Abdeckelement (12) angeordnet ist und einer der Kühlkanaleingänge (8.2) jeweils durch eines der beiden Abdeckelemente (10,12) an einem radial äußersten Teilquerschnitt und der zugeordnete Kühlkanalausgang (8.1) desselben Kühlkanals (5) jeweils durch das andere Abdeckelement (10,12) an einem radial innersten Teilquerschnitt derart abgedeckt ist, dass jeweils ein radialer Versatz (V) zwischen den unbedeckten bzw. offenen Querschnitten der beiden Kühlkanalöffnungen (8.1,8.2) eines der Kühlkanäle (5) erzeugt ist.

2. Rotor nach Anspruch 1, **dadurch gekennzeichnet, dass** der radiale Versatz (V) der beiden Kühlkanalöffnungen (8.1,8.2) eines der Kühlkanäle (5) ausschließlich durch die beiden Abdeckelemente (10,12) erzeugt ist.

3. Rotor nach einem der vorhergehenden Ansprüche, **dadurch gekennzeichnet, dass** der Kühlkanaleingang (8.2) und der Kühlkanalausgang (8.1) jedes Kühlkanals (5) einer ersten Gruppe von Kühlkanälen (5) jeweils gegenüber dem jeweiligen Kühlkanaleingang (8.2) und Kühlkanalausgang (8.1) einer zweiten Gruppe von Kühlkanälen (5) derart stirnseitenvertauscht ist, dass die Kühlkanäle (5) der ersten Gruppe und die Kühlkanäle (5) der zweiten Gruppe bei Rotation des Rotors (1) in entgegengesetzter Richtung durchströmt sind.

4. Rotor nach Anspruch 3, **dadurch gekennzeichnet, dass** eine oder mehrere Abfolgen von zumindest einem Kühlkanal (5) der ersten Gruppe von Kühlkanälen (5) und von zumindest einem Kühlkanal (5) der zweiten Gruppe von Kühlkanälen (5) entlang des Umfangs des Rotors (1) vorgesehen sind.

5. Rotor nach einem der Ansprüche 1 bis 4, **dadurch gekennzeichnet, dass** die auf einer der beiden Stirnseiten des Rotors (1) angeordneten Kühlkanalöffnungen (8.1,8.2) jeweils, insbesondere in Umfangsrichtung abwechselnd, entweder am radial äußersten oder am radial innersten Teilquerschnitt abgedeckt sind, und dass die beiden Abdeckelemente (10,12) in Umfangsrichtung zueinander versetzt sind, insbesondere um einen Winkel, der einem Winkelabstand zwischen zwei benachbarten Kühlkanälen (5) entspricht.

6. Rotor nach Anspruch 5, **dadurch gekennzeichnet, dass** die beiden Abdeckelemente (10,12) jeweils Bereiche (15,16) mit unterschiedlicher radialer Erstreckung aufweisen, wobei erste Bereiche (15) der beiden Abdeckelemente (10,12) jeweils die radial innersten Teilquerschnitte der Kühlkanalausgänge (8.1) abdecken, wobei zweite Bereiche (16) der beiden Abdeckelemente (10,12) jeweils die radial äußersten Teilquerschnitte der Kühlkanaleingänge (8.2) abdecken und radial innerhalb der abgedeckten äußersten Teilquerschnitte in den jeweiligen Kühlkanal (5) mündende Durchgangsöffnungen (17) aufweisen und wobei die ersten Bereiche (15) der beiden Abdeckelemente (10,12) jeweils eine kleinere radiale Erstreckung aufweisen als die zweiten Bereiche (16).

7. Rotor nach einem der vorhergehenden Ansprüche, **dadurch gekennzeichnet, dass** das erste und/oder zweite Abdeckelement (10,12) eine Scheibe, insbesondere eine Wuchtscheibe oder eine Blechlamelle des zumindest einen Rotorteilkörpers (4), ist.

8. Rotor nach einem der vorhergehenden Ansprüche, **dadurch gekennzeichnet, dass** die Kühlkanäle (5) des Rotorkörpers (3) und/oder die Kühlkanalabschnitte (5.1) jedes Rotorteilkörpers (4) des Rotorkörpers (3) in axialer Richtung bezüglich der Rotorachse (2) verlaufen.

9. Elektrische Maschine mit einem Stator (20) und einem Rotor (1) nach einem der vorhergehenden Ansprüche, wobei die beiden Kühlkanalöffnungen (8.1,8.2) des jeweiligen Kühlkanals (5) des Rotors (1) in axialer Richtung in einen stirnseitig an den Rotor (1) angrenzenden, insbesondere luftgefüllten, Gehäuseinnenraum (22) der elektrischen Maschine führen.

## Claims

1. Rotor of an electric machine, having a rotor body (3) which is rotatable about a rotor axis (2), comprises at least one rotor body element (4), in particular a rotor laminated core (4), and has in each case one or more cooling ducts (5) which each have a cooling duct opening (8.1, 8.2) at their ends, wherein the one cooling duct opening (8.1) of one of the cooling ducts (5) is in each case arranged radially farther outside than the other cooling duct opening (8.2) of the same cooling duct (5), in such a way that an air flow is established in the cooling duct (5) owing to the centrifugal forces when the rotor (1) rotates, wherein a first cover element (10) is provided on one of the two end sides of the rotor body (3) and covers a radially innermost partial cross section of at least one of the cooling duct openings (8.1) of at least one of the cooling ducts (5),
**characterized in that**
- the first cover element (10) covers the radially innermost partial cross section of the respective cooling duct opening (8.1) by way of a radially outer edge portion (11) with respect to the rotor axis (2) and in each case leaves a radially outermost partial cross section of the same cooling duct opening (8.1) uncovered as cooling duct outlet (8.1), **in that**
- the other cooling duct opening (8.2) of the same cooling duct (5) is in each case a cooling duct inlet, and **in that** a respective axial inflow with respect to the rotor axis (2) is provided upstream of the cooling duct inlets (8.2), **in that**
- the geometric centre (S1) of the cooling duct outlet (8.1) is offset in the radial direction with respect to the rotor axis (2) in each case in relation to the geometric centre (S2) of the cooling duct inlet (8.2) of the same cooling duct (5), **in that**
- a second cover element (12) is arranged on the other end side of the rotor body (3), and one of the cooling duct inlets (8.2) is covered in each case by one of the two cover elements (10, 12) at a radially outermost partial cross section, and the assigned cooling duct outlet (8.1) of the same cooling duct (5) is covered in each case by the other cover element (10, 12) at a radially innermost partial cross section, in such a way that a respective radial offset (V) between the uncovered or open cross sections of the two cooling duct openings (8.1, 8.2) of one of the cooling ducts (5) is generated.

2. Rotor according to Claim 1, **characterized in that** the radial offset (V) of the two cooling duct openings (8.1, 8.2) of one of the cooling ducts (5) is generated exclusively by the two cover elements (10, 12).

3. Rotor according to either of the preceding claims, **characterized in that** the cooling duct inlet (8.2) and the cooling duct outlet (8.1) of each cooling duct (5) of a first group of cooling ducts (5) are in each case reversed in terms of end side in relation to the respective cooling duct inlet (8.2) and cooling duct outlet (8.1) of a second group of cooling ducts (5) in such a way that the cooling ducts (5) of the first group and the cooling ducts (5) of the second group are flowed through in opposite directions when the rotor (1) rotates.

4. Rotor according to Claim 3, **characterized in that** one or more sequences of at least one cooling duct (5) of the first group of cooling ducts (5) and of at least one cooling duct (5) of the second group of cooling ducts (5) is/are provided along the circumference of the rotor (1).

5. Rotor according to one of Claims 1 to 4, **characterized in that** the cooling duct openings (8.1, 8.2) arranged on one of the two end sides of the rotor (1) are in each case covered, in particular so as to alternate in the circumferential direction, either at the radially outermost or at the radially innermost partial cross section, and **in that** the two cover elements (10, 12) are offset relative to one another in the circumferential direction, in particular by an angle which corresponds to an angular spacing between two adjacent cooling ducts (5).

6. Rotor according to Claim 5, **characterized in that** the two cover elements (10, 12) each have regions (15, 16) of different radial extent, wherein first regions (15) of the two cover elements (10, 12) cover in each case the radially innermost partial cross sections of the cooling duct outlets (8.1), wherein second regions (16) of the two cover elements (10, 12) cover in each case the radially outermost partial cross sections of the cooling duct inlets (8.2) and have passage openings (17) which lead into the respective cooling duct (5) radially within the covered outermost partial cross sections, and wherein the first regions (15) of the two cover elements (10, 12) each have a smaller radial extent than the second regions (16).

7. Rotor according to one of the preceding claims, **characterized in that** the first and/or second cover element (10, 12) are/is a disc, in particular a balancing disc or a sheet-metal lamination of the at least one rotor body element (4).

8. Rotor according to one of the preceding claims, **characterized in that** the cooling ducts (5) of the rotor body (3) and/or the cooling duct portions (5.1) of each rotor body element (4) of the rotor body (3) run in the axial direction with respect to the rotor axis (2).

9. Electric machine having a stator (20) and a rotor (1) according to one of the preceding claims, wherein the two cooling duct openings (8.1, 8.2) of the respective cooling duct (5) of the rotor (1) lead in the axial direction into an in particular air-filled housing interior (22) of the electric machine, said housing interior adjoining the rotor (1) at the end side.

## Revendications

1. Rotor d'une machine électrique comprenant un corps de rotor (3) pouvant tourner autour d'un axe de rotor (2), qui comprend au moins un corps partiel de rotor (4), notamment un paquet de tôles de rotor (4), et possède respectivement un ou plusieurs canaux de refroidissement (5) qui ont à leurs extrémités respectivement une ouverture de canal de refroidissement (8.1, 8.2), l'une des ouvertures de canal de refroidissement (8.1) de l'un des canaux de refroidissement (5) étant respectivement disposée radialement plus à l'extérieur que l'autre ouverture de canal de refroidissement (8.2) du même canal de refroidissement (5), de telle sorte qu'un écoulement d'air s'établit dans le canal de refroidissement (5) lors de la rotation du rotor (1) du fait des forces centrifuges, un premier élément de recouvrement (10) étant prévu au niveau de l'un des deux côtés frontaux du corps de rotor (3), lequel recouvre une section transversale partielle radialement la plus à l'intérieur d'au moins l'une des ouvertures de canal de refroidissement (8.1) d'au moins l'un des canaux de refroidissement (5),
**caractérisé en ce que**
- le premier élément de recouvrement (10) recouvre la section transversale partielle radialement la plus à l'intérieur de l'ouverture de canal de refroidissement (8.1) respective avec une portion de bord (11) radialement extérieure par rapport à l'axe de rotor (2) et laisse respectivement non recouverte une section transversale partielle radialement la plus à l'extérieur de la même ouverture de canal de refroidissement (8.1) en tant que sortie de canal de refroidissement (8.1), **en ce que**
- l'autre ouverture de canal de refroidissement (8.2) du même canal de refroidissement (5) est respectivement une entrée de canal de refroidissement et **en ce qu'**il est respectivement prévu, en amont des entrées de canal de refroidissement (8.2), une arrivée d'air axiale par rapport à l'axe de rotor (2), **en ce que**
- le centre de gravité géométrique (S1) de la sortie du canal de refroidissement (8.1) est respectivement décalé par rapport au centre de gravité géométrique (S2) de l'entrée du canal de refroidissement (8.2) du même canal de refroidissement (5) dans la direction radiale par rapport à l'axe du rotor (2), **en ce que**
- un deuxième élément de recouvrement (12) est disposé au niveau de l'autre côté frontal du corps de rotor (3) et l'une des entrées de canal de refroidissement (8.2) est respectivement recouverte par l'un des deux éléments de recouvrement (10, 12) au niveau d'une section transversale partielle radialement la plus à l'extérieur et la sortie de canal de refroidissement (8.1) associée du même canal de refroidissement (5) respectivement par l'autre élément de recouvrement (10, 12) au niveau d'une section transversale partielle radialement la plus à l'intérieur, de telle sorte qu'un décalage radial (V) est respectivement produit entre les sections transversales non recouvertes ou ouvertes des deux ouvertures de canal de refroidissement (8.1, 8.2) de l'un des canaux de refroidissement (5).

2. Rotor selon la revendication 1, **caractérisé en ce que** le décalage radial (V) des deux ouvertures de canal de refroidissement (8.1, 8.2) de l'un des canaux de refroidissement (5) est produit exclusivement par les deux éléments de recouvrement (10, 12).

3. Rotor selon l'une des revendications précédentes, **caractérisé en ce que** l'entrée de canal de refroidissement (8.2) et la sortie de canal de refroidissement (8.1) de chaque canal de refroidissement (5) d'un premier groupe de canaux de refroidissement (5) ont respectivement leurs côtés frontaux intervertis par rapport à l'entrée de canal de refroidissement (8.2) et à la sortie de canal de refroidissement (8.1) respectives d'un deuxième groupe de canaux de refroidissement (5), de telle sorte que les canaux de refroidissement (5) du premier groupe et les canaux de refroidissement (5) du deuxième groupe sont traversés par un flux en sens inverse lors de la rotation du rotor (1).

4. Rotor selon la revendication 3, **caractérisé en ce qu'**une ou plusieurs séquences d'au moins un canal de refroidissement (5) du premier groupe de canaux de refroidissement (5) et d'au moins un canal de refroidissement (5) du deuxième groupe de canaux de refroidissement (5) sont prévues le long de la circonférence du rotor (1).

5. Rotor selon l'une des revendications 1 à 4, **caractérisé en ce que** les ouvertures de canaux de refroidissement (8.1, 8.2) disposées sur l'un des deux côtés frontaux du rotor (1) sont respectivement recouvertes, notamment en alternance dans la direction circonférentielle, soit sur la section partielle radialement la plus extérieure, soit au niveau de la section transversale partielle radialement la plus à l'extérieur, soit radialement la plus à l'intérieur, et **en ce que** les deux éléments de recouvrement (10, 12) sont décalés l'un par rapport à l'autre dans la direction circonférentielle, notamment d'un angle qui correspond à une distance angulaire entre deux canaux de refroidissement (5) voisins.

6. Rotor selon la revendication 5, **caractérisé en ce que** les deux éléments de recouvrement (10, 12) possèdent respectivement des zones (15, 16) avec une extension radiale différente, les premières zones (15) des deux éléments de recouvrement (10, 12) recouvrant respectivement les sections transversales partielles radialement les plus à l'intérieur des sorties de canal de refroidissement (8.1), les deuxièmes zones (16) des deux éléments de recouvrement (10, 12) recouvrant respectivement les sections transversale partielles radialement les plus à l'extérieur des entrées de canal de refroidissement (8.2) et possédant des ouvertures de passage (17) qui débouchent radialement à l'intérieur des sections transversales partielles les plus à l'extérieur recouvertes dans le canal de refroidissement (5) respectif, et les premières zones (15) des deux éléments de recouvrement (10, 12) présentant chacune une extension radiale plus petite que les deuxièmes zones (16).

7. Rotor selon l'une des revendications précédentes, **caractérisé en ce que** le premier et/ou le deuxième élément de recouvrement (10, 12) est un disque, notamment un disque d'équilibrage ou une lamelle de tôle de l'au moins un corps partiel de rotor (4).

8. Rotor selon l'une des revendications précédentes, **caractérisé en ce que** les canaux de refroidissement (5) du corps de rotor (3) et/ou les portions de canaux de refroidissement (5.1) de chaque corps partiel de rotor (4) du corps de rotor (3) suivent un tracé dans la direction axiale par rapport à l'axe de rotor (2).

9. Machine électrique comprenant un stator (20) et un rotor (1) selon l'une des revendications précédentes, les deux ouvertures de canal de refroidissement (8.1, 8.2) du canal de refroidissement (5) respectif du rotor (1) menant, dans la direction axiale, dans un espace intérieur de carter (22) de la machine électrique, notamment rempli d'air, adjacent au côté frontal du rotor (1).
